(19) Europäisches Patentamt
European Patent Office
Office européen des brevets

(11) **EP 2 222 141 B1**

(12) **EUROPEAN PATENT SPECIFICATION**

(45) Date of publication and mention
of the grant of the patent:
**29.02.2012 Bulletin 2012/09**

(51) Int Cl.:
**H05B 41/288** (2006.01)

(21) Application number: **10151461.0**

(22) Date of filing: **22.01.2010**

(54) **Discharge lamp lighting circuit for AC-driving a discharge lamp**

Entladungslampenlichtstromkreis für den Wechselstrombetrieb einer Entladungslampe

Circuit d'éclairage de lampe à décharge pour l'alimentation CA d'une lampe à décharge

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.02.2009 JP 2009041254**

(43) Date of publication of application:
**25.08.2010 Bulletin 2010/34**

(73) Proprietor: **Koito Manufacturing Co., Ltd.**
**Tokyo 108-8711 (JP)**

(72) Inventors:
• **Yanagidu, Shouhei**
**Shizuoka 424-8764 (JP)**
• **Ito, Masayasu**
**Shizuoka 424-8764 (JP)**
• **Muramatsu, Takao**
**Shizuoka 424-8764 (JP)**
• **Tsuchiya, Toshiyuki**
**Shizuoka 424-8764 (JP)**

(74) Representative: **Neobard, William John et al**
**Kilburn & Strode LLP**
**20 Red Lion Street**
**London WC1R 4PJ (GB)**

(56) References cited:
**JP-A- 8 222 390        JP-A- 11 329 777**
**JP-A- 2009 026 560    US-B1- 6 437 519**

• **DOSHI M ET AL: "Low frequency architecture for multilamp CCFL systems with capacitive ignition" APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA, IEEE, US LNKD- DOI:10.1109/APEC. 2005.1453127, vol. 2, 6 March 2005 (2005-03-06), pages 1072-1078VOL.2, XP010809429 ISBN: 978-0-7803-8975-5**

**Description**

The present invention relates to a discharge lamp lighting circuit for AC-drive of a discharge lamp.

In recent years, metal halide lamps (hereinafter referred to as discharge lamps) have been in wider use as automotive lamps (headlamps) replacing conventional halogen lamps having a filament or filaments. The discharge lamps feature better luminance efficiency and longer life than the halogen lamps. However, the discharge lamps require several tens to several hundreds of volts as drive voltage, and thus they cannot be directly driven by a vehicular battery of 12 V (or 24 V). For vehicular applications, therefore, the installment of a discharge lamp lighting circuit (also called an electrical ballast) is required.

The systems for lighting the discharge lamps are classified into the DC drive type and the AC drive type. The DC drive type, however, is not suited to uses for automotive lamps because its discharge arc is asymmetric and luminescence profile is uneven. An AC drive is therefore generally used for automotive lamps. Yet, the AC drive of a discharge lamp at high frequencies of 10 kHz or over causes a phenomenon of gas current within the discharge tube resonating with the lighting frequency (also called an acoustic resonance or the like), presenting a problem of unstable discharge arc. Accordingly, a system for driving at low frequencies of 10 kHz or below (low-frequency drive system) has today become mainstream.

A discharge lamp lighting circuit disclosed in Japanese Patent Application Publication No. Hei11-329777 includes a DC-DC converter for boosting the battery voltage, a switching circuit, such as an H-bridge circuit, for AC-converting the output voltage of the DC-DC converter, a starter circuit, and a control circuit for controlling these circuit blocks.

In the situation where the discharge lamp is to be AC-driven, the drive current flowing through the discharge lamp changes its direction crossing zero after the polarity of a drive voltage applied to the discharge lamp has been switched. In so doing, the drive current becomes small and therefore it is theoretically possible that the lamp may go out. Here, "the lamp goes out" means a state in which the polarity stops switching while the drive current remains substantially zero.

In JP-A-8222390 in a discharge lamp operating circuit, to cause rectangular-wave lighting of a discharge lamp without extinction even at the end of its life, energy supplied from a voltage converting part 2 is stored in a capacitor C0 , and the voltages Vc at both ends of the capacitor C0 are polarity-inverted by means of an inverter part 3 to cause rectangular-wave lighting of the discharge lamp LP. A drive circuit 7 which performs switching control of the switching elements Q1 to Q4 of the inverter part 3 is provided with a low-frequency oscillating circuit 14. An output of the low-frequency oscillating circuit 14 is given to a control circuit 6 controlling the switching element Q0 of the voltage converting part 2. When the output of the low-frequency oscillating circuit 14 is at L level (dead time), the switch SW1 of the control circuit 6 is switched to the side of a reference power supply 13. As a result, the duty ratio of the switching element Q0 is increased during dead time, and the voltage needed to re-ignite the discharge lamp LP can be obtained.

In JP-A-2009 026560, to avoid going out of a discharge lamp in a half-wave discharge state by quickly increasing power supply to the lamp, the ON duty of a switching element Q0 is set up to be variable by a calculation section 53 so as to supply appropriate power to the discharge lamp DL by receiving output of lamp state detection sections 51, 52 at the time of normal lighting of the discharge lamp DL which is not going out. When detecting that lamp voltage exceeds the normal lighting voltage or detecting that lamp current is reduced rather than the normal lighting current, the ON duty of the switching element Q0 is forcibly widened without an operation processed by an operation section 53 before the discharge lamp DL goes out by receiving the output from a VLA determination section 57 or an ILA determination section 58, and output power of a DC/DC converter section 2 is increased earlier than the operation processed by the operation section 53.

Doshi M et al "Low frequency architecture for multi-lamp CCFL systems with Capacitive Ignition" [Applied Power Electronics Conference, 2005 pages 1072-1078] discloses supplying a first drive voltage to one end of a discharge lamp to be driven, by a first DC-DC converter in an active state; supplying a second drive voltage to the other end of the discharge lamp, by the second DC-DC converter in an active state; conducting electrical current between the one end of the discharge lamp and a fixed voltage terminal, by a first switch; conducting electrical current between the other end of the discharge lamp and the fixed voltage terminal, by a second switch; alternately setting the first DC-DC converter and the second DC-DC converter in the active state, and a dead time between alternate converter operation.

US-B1-6437519 discloses a lighting circuit 1 with a DC power supply circuit 3, a DC-AC conversion circuit 4 for converting the output voltage of the DC power supply circuit 3 into AC voltage and then supplying the AC voltage to two discharge lamps, and a control circuit 8 for controlling lighting of each discharge lamp in response to a voltage or current detection signal related to the discharge lamp. A full-bridge type circuit consisting of four switch elements is formed in the DC-AC conversion circuit 4 to switch positive-polarity voltage and negative-polarity voltage output from the DC power supply circuit 3, and AC voltage generated by alternately operating the switch elements in pairs is supplied to each discharge lamp. To light one discharge lamp, the state of each of the switch elements is fixed so that the polarity of the voltage supplied to the discharge lamp before the discharge lamp is started is defined as either positive or negative polarity and the switch elements are alternately operated after the discharge lamp is lighted.

The present invention has been made in view of the foregoing circumstances, and a purpose thereof is to provide a discharge lamp lighting circuit capable of reducing the possibility of lamp going out as the polarity switches.

The invention is recited in the appended claims

Embodiments will now be described by way of examples only, with reference to the accompanying drawings in which:

FIG 1 is a circuit diagram showing a configuration of a discharge lamp lighting circuit according to a first embodiment of the present invention and its constituent members and components connected thereto;

FIG. 2 is a circuit block diagram showing a function and configuration of a converter drive unit;

FIG. 3 is a circuit diagram showing a configuration of a PWM signal generator;

FIG. 4 is a timing chart showing waveforms in the PWM signal generator of FIG. 3;

FIG. 5 is a circuit diagram showing a configuration of an after-switching assistant period determining unit;

FIG. 6 is a timing chart showing waveforms in the after-switching assistant period determining unit of FIG. 5;

FIG. 7 is a timing chart showing an operating state of the discharge lamp lighting circuit of FIG. 1;

FIGS. 8A and 8B are timing charts showing operating states after a DC period of the discharge lamp lighting circuit;

FIG. 9 is a circuit diagram showing a configuration of a discharge lamp lighting circuit according to a second embodiment of the present invention and its constituent members and components connected thereto;

FIG. 10 is a timing chart showing waveforms in the discharge lamp lighting circuit of FIG. 9;

FIGS. 11A, 11B and 11C are graphs showing how the polarity of a lamp current IL is switched when the lengths of a before-switching assistant period PT2 are set to 0 $\mu$s, 10 $\mu$s and 25 $\mu$s, respectively; and

FIGS. 12A, 12B and 12C are graphs showing how the polarity of lamp current IL is switched when the lamp currents IL are 1.5 A, 1 A and 0.5 A, respectively.

Embodiments of the present invention will now be described with reference to the accompanying drawings.

In the present specification, the state represented by the phrase "the member A is connected to the member B" includes a state in which the member A is indirectly connected to the member B via another member that does not affect the electric connection therebetween, in addition to a state in which the member A is physically and directly connected to the member B. Similarly, the state represented by the phrase "the member C is provided or connected between the member A and the member B" includes a state in which the member A is indirectly connected to the member C, or the member B is indirectly connected to the member C via another member that does not affect the electric connection therebetween, in addition to a state in which the member A is directly connected to the member C, or the member B is directly connected to the member C.

(First embodiment)

A discharge lamp lighting circuit according to a first embodiment of the present invention generates a required voltage, with which a drive current flowing through a discharge lamp can smoothly pass through zero, in such a manner that the output power of a DC-DC converter is temporarily increased after the polarity of drive voltage applied to the discharge lamp has been switched.

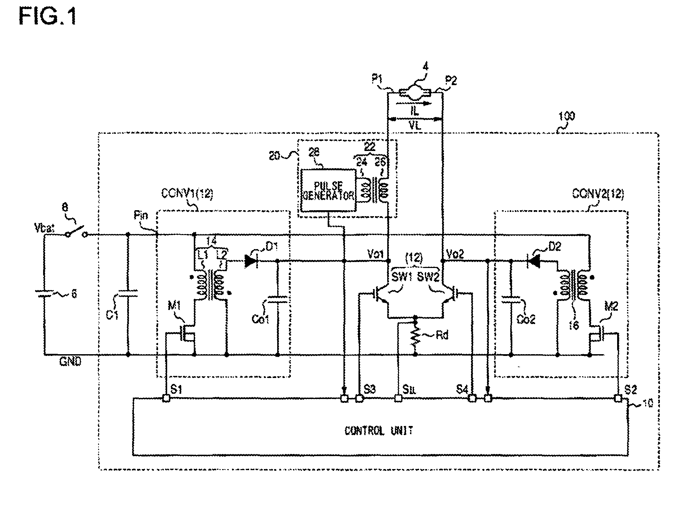

FIG. 1 is a circuit diagram showing a configuration of a discharge lamp lighting circuit 100 according to the first embodiment of the present invention and its constituent members and components connected thereto. The discharge lamp lighting circuit 100 drives a discharge lamp 4 which is a metal halide lamp for use in a vehicle. The discharge lamp lighting circuit 100 is connected to a vehicular battery (hereinafter referred to simply as a battery) 6 and a power supply switch 8.

The battery 6 generates a DC voltage Vbat of 12 V (or 24 V). The power supply switch 8, which is connected in series to the battery 6, is a relay switch for controlling the on and off of the discharge lamp 4. As the power supply switch 8 turns on, the battery voltage Vbat is supplied from the battery 6 to the discharge lamp lighting circuit 100.

The discharge lamp lighting circuit 100 boosts a smoothed battery voltage Vbat, AC-converts it, and supplies the AC-converted voltage to the discharge lamp 4. A description is given hereunder of a detailed configuration of the discharge lamp lighting circuit 100.

The discharge lamp lighting circuit 100 includes a first DC-DC converter CONV1, a second DC-DC converter CONV2, a control circuit 10, a starter circuit 20, a first switch SW1, a second switch SW2, a current sensing resistor R1 and an input capacitor C1.

The input capacitor C1, which is connected in parallel with the battery 6, smoothes the battery voltage Vbat. More specifically, the input capacitor C1, located in the vicinity of a first transformer 14 and a second transformer 16, performs a function of smoothing the voltage disturbed by the switching operation of the first DC-DC converter CONV1 and the second DC-DC converter CONV2.

The control circuit 10, which includes a functional IC (integrated circuit) for controlling the discharge lamp lighting circuit 100 as a whole, not only controls the operation sequence of the discharge lamp lighting circuit 100 but also adjusts the electric power to be supplied to the discharge lamp 4. The control circuit 10 executes the following sequences to light up the discharge lamp 4 and stabilize the light output thereof:

    1. Power on
    2. Breakdown
    3. DC period
    4. Run-up
    5. Steady lighting

The details of each sequence will be discussed later.

The first DC-DC converter CONV1, the second DC-DC converter CONV2, the first switch SW1 and the second switch SW2 constitute a drive voltage generating unit 12 that generates a drive voltage VL for the discharge lamp 4. In the aforementioned run-up period and steady lighting period, the drive voltage generating unit 12 supplies an AC drive voltage VL of a lighting frequency f1 across the discharge lamp 4. The lighting frequency f1 is set to 10 kHz or below, or more specifically to about 250 Hz to 750 Hz. The inverse of the lighting frequency f1 is called a lighting cycle T1 (= 1/f1).

The first DC-DC converter CONV1, which is an insulated switching regulator, includes a first switching element M1, a first transformer 14, a first rectifier diode D1, and a first output capacitor Co1. Since the topology of the first DC-DC converter CONV1, is generally known, it will be explained briefly.

A primary coil L1 of the first transformer 14 and the first switching element M1 are connected in parallel with the input capacitor C1 and in series with each other between an input terminal Pin of the first DC-DC converter CONV1 and a ground terminal (GND). The first switching element M1 is constructed of an N-channel MOSFET, for instance. One end of a secondary coil L2 of the first transformer 14 is grounded, and the other end thereof is connected to an anode of the first rectifier diode D1. The first output capacitor Co1 is connected between a cathode of the first rectifier diode D1 and a ground terminal.

A first control pulse signal S1 having a PWM frequency f2, which is higher than the aforementioned lighting frequency f1, is applied to a control terminal (gate) of the first switching element M1. For instance, the PWM frequency f2 is 400 kHz. The first switching element M1 turns on when the first control pulse signal S1 goes high and turns off when the pulse signal S1 goes low. The control circuit 10 adjusts the duty ratio of high level and low level of the first pulse signal S1 by feedback based on the electrical state of the discharge lamp 4.

The first DC-DC converter CONV1, which is switchable between an active state and a non-active state, supplies a first output voltage Vo1 to a first end P1 (one end P1) of the discharge lamp 4 in the active state.

The second DC-DC converter CONV2 has the same circuit topology as the first DC-DC converter CONV1. That is, a second rectifier diode D2 corresponds to the first rectifier diode D1, a second output capacitor Co2 corresponds to the first output capacitor Co1, a second transformer 16 corresponds to the first transformer 14, and a second switching element M2 corresponds to the first switching element M1. The on-off of the second switching element M2 is controlled by feedback based on the electrical state of the discharge lamp 4, using a second control pulse signal S2 generated by the control circuit 10.

The second DC-DC converter CONV2, which is also switchable between the active state and the non-active state, supplies a second output voltage Vo2 to a second end P2 (the other end P2) of the discharge lamp 4 in the active state.

The first switch SW1, which is connected on a first end P1 side of the discharge lamp 4, provides electrical conduction between the first end P1 of the discharge lamp 4 and a fixed voltage terminal (ground terminal) when the first switch SW1 is on. The second switch SW2, which is connected on a second end P2 side of the discharge lamp 4, provides electrical conduction between the second end P2 of the discharge lamp 4 and the fixed voltage terminal (ground terminal) when the second switch SW2 is on. It should be noted that IGBT (insulated gate bipolar transistor) or MOSFET may be suitably used as the first switch SW1 and second switch SW2, but any other alternative device may be used as well. The on and off states of the first switch SW1 and the second switch SW2 are controlled in response to the first control signal S3 and the second control signal S4 from the control circuit 10, respectively.

The first DC-DC converter CONV1 and the second DC-DC converter CONV2 repeat the active state and the non-active state alternately on a lighting cycle T1. In other words, the active period of the first DC--DC converter CONV1 and the active period of the second DC-DC converter CONV2 are each a half cycle of the lighting cycle T1. Hereinbelow, a state in which the first DC-DC converter CONV1 is active will be referred to as a first state $\phi1$, and a state in which the second DC-DC converter CONV2 is active will be referred to as a second state $\phi2$. The first switch SW1 turns on when the second DC-DC converter CONV2 is active, or in the second state $\phi2$, whereas the second switch SW2 turns on when the first DC-DC converter CONV1 is active, or in the first state $\phi1$.

In the first state $\phi1$, a first output voltage Vo1 is applied to the first end P1 of the discharge lamp 4, and a ground voltage (0 V) is applied to the second end P2 thereof, As a result, a drive voltage VL (≈Vol) in a first polarity is applied to the discharge lamp 4. In the second state $\phi2$, a second output voltage Vo2 is applied to the second end P2 of the discharge lamp 4, and a ground voltage is applied to the first end P1 thereof. As a result, a drive voltage VL (≈Vo2) in a second polarity, which is the opposite of the first polarity, is applied to the discharge lamp 4.

In a run-up period and a steady lighting period, the control circuit 10 repeats the first state $\phi1$ and the second state $\phi2$ alternately on a lighting cycle T1. As a result, an AC drive voltage VL is supplied to the discharge lamp 4.

The current sensing resistor Rd is connected on a path of lamp current IL flowing to the discharge lamp 4. In the circuit shown in FIG. 1, the current sensing resistor Rd is connected between the emitters of the commonly connected first switch SW1 and second switch SW2 and a ground terminal. In the first state $\phi1$, a lamp current flows in a first polarity (rightward in FIG. 1) in the discharge lamp 4, and in the second state $\phi2$, a lamp current flows in a second polarity (leftward in FIG. 1) in the discharge lamp 4. In each of the first state $\phi1$ and the second state $\phi2$, a voltage drop (called current sensing signal $S_{IL}$) proportional to the lamp current IL occurs in the current sensing resistor Rd. The current sensing signal $S_{IL}$ is inputted to the control circuit 10.

The starter circuit 20, which is provided to effect a breakdown of the discharge lamp 4, includes a starter transformer 22 and a pulse generator 28. The pulse generator 28 applies a pulse voltage of 400 V to 1 kV amplitude to a primary coil 24 of the starter transformer 22. As a result, a high-voltage pulse (e.g., 20 kV) corresponding to the turn ratio of the starter transformer 22 occurs in a secondary coil 26 side and is then applied to the discharge lamp 4. Thus the discharge lamp 4 breaks down to start a discharge.

When the state is switched between the first state $\phi1$ and the second state $\phi2$ in the discharge lamp lighting circuit 100, the polarity of the lamp current IL also switches as described above. In this process of switching the polarity, the lamp current IL becomes small and passes through zero in particular and therefore it is possible that the discharge lamp 4 may fail to switch the polarity and go out. Thus, it is preferable that the voltage across the output capacitor of the DC-DC converter in the active state (this voltage will be hereinafter referred to as "restriking compensation voltage") is raised until a predetermined period PT1 (hereinafter referred to as "after-switching assistant period") has elapsed after the switching between the first state $\phi1$ and the second state $\phi2$. Raising the voltage thereacross prompts the switching of the polarity of the lamp current IL and reduces the possibility that the lamp may go out. The control circuit 10 achieves such a control as this.

The control circuit 10 sets the drive voltage generating unit 12 so that the electrical state of the discharge lamp 4 (e.g., the drive voltage VL, the lamp current IL or drive power PL ($=VL\times IL$)) can be brought closer to a desired state. Further, the control circuit 10 performs a control to increase the drive power PL supplied to the discharge lamp 4 from the drive voltage generating unit 12 such that the drive power PL exceeds a predetermined target power Pt in a period from when the drive voltage generating unit 12 is so set as to switch the polarity of the drive voltage VL to when the after-switching assistant period PT1 elapses.

Here, setting the drive voltage generating unit 12 in such a manner as to switch the polarity of the drive voltage VL corresponds to switching between the first state $\phi1$ and the second state $\phi2$.

The control unit 10 includes a converter drive unit 30 (not shown in FIG. 1) that drives the first DC-DC converter CONV1 and the second DC-DC converter in a complementary manner at the lighting frequency of f1. Upon receipt of a signal Se, indicating the electrical state of the discharge lamp 4, such as the current sensing signal $S_{IL}$, the first output voltage Vo1 and the second output voltage Vo2, the converter drive unit 30 outputs, in a complementary manner, a PMM signal $S_{PWM}$ whose duty ratio has been adjusted such that the drive power PL is brought closer to the target power Pt.

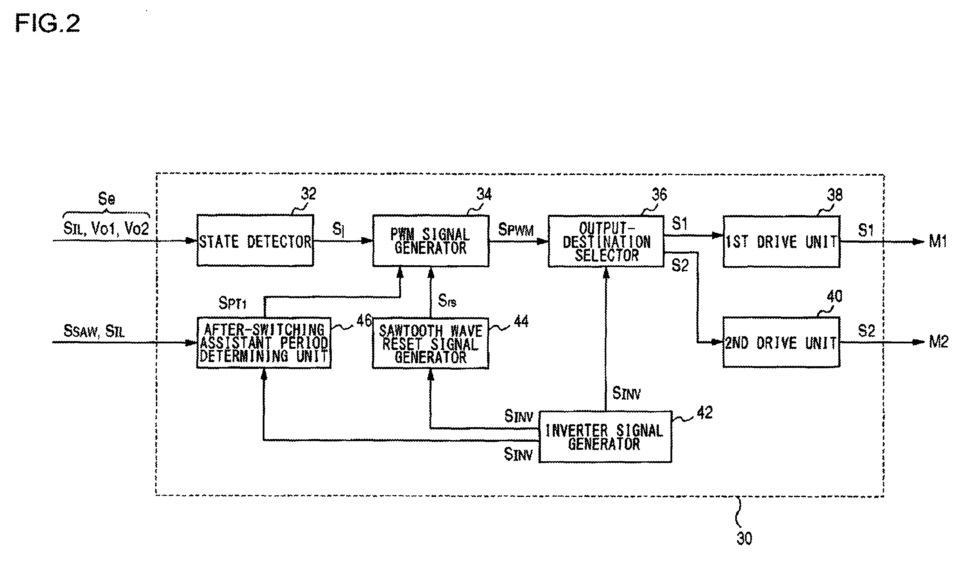

FIG. 2 is a circuit block diagram showing a function and configuration of a converter driver unit 30. The converter drive unit 30 includes a state detector 32, a PWM signal generator 34, an output-destination selector 36, a first drive unit 38, a second drive unit 40, an inverter signal generator 42, a sawtooth wave reset signal generator 44, and an after-switching assistant period determining unit 46.

The state detector 32 generates a state signal Sj indicating the drive power PL, from the signal Se indicating the electrical state of the discharge lamp 4.

The PWM signal generator 34 compares the voltage of the state signal Sj with a predetermined reference voltage Vref corresponding to the target power Pt, and adjusts the duty ratio of the PWM signal $S_{PWM}$ such that the voltage of the state signal Sj and the reference voltage Vref are brought closer to each other. Thus, a control is performed such that the drive power PL is brought closer to the target power Pt.

Also, the PWM signal generator 34 receives an after-switching assistant period determining signal $S_{PTL}$ from the after-switching assistant period determining unit 46, and then extends an on-period of a switching element of the DC-DC converter which is in the active state, during a period from when the first state $\phi1$ switches to the second state $\phi2$ or the second state $\phi2$ switches to the first state $\phi1$ until when the after-switching assistant period PT1 has elapsed. This increases temporarily the output power delivered from the DC-DC converter. In other words, a control of increasing the drive power PL is performed such that the drive power PL exceeds the target power Pt.

Also, the PWM signal generator 34 receives a sawtooth wave reset signal $S_{re}$ from the sawtooth wave reset signal generator 44 and then starts the on-period of a switching element of the DC-DC converter in synchronization with the start of the after-switching assistant period PT1, namely the timing at which the first state $\phi1$ switches to the second state $\phi2$ or the second state $\phi2$ switches to the first state $\phi1$.

Further detail of the PWM signal generator 34 will be discussed later.

The output-destination selector 36 receives an inverter signal $S_{INV}$ and a PWM signal $S_{PWM}$. The inverter signal $S_{INV}$, which is a signal generated by the inverter signal generator 42, takes a complementary level between the first state $\phi1$ and the second state $\phi2$. Here, the inverter signal $S_{INV}$ goes high in the first state $\phi1$ and goes low in the second state $\phi2$.

When the inverter signal $S_{INV}$ is high, the output-destination selector 36 outputs the PWM signal $S_{PWM}$ as the first control pulse signal 51 to the first switching element M1 via the first drive unit 38. In this case, the output-destination selector 36 fixes the second pulse signal S2 at a low level and turns off the second switching element M2. The first drive unit 38 is configured by including a buffer circuit which buffers the first control pulse signal S1.

When the inverter signal $S_{INV}$ is low, the output-destination selector 36 outputs the PMM signal $S_{PWM}$ as the second control pulse signal S2 to the second switching element M2 via the second drive unit 40. In this case, the output-destination selector 36 fixes the first pulse signal S1 at the low level and turns off the first switching element M1. The second drive unit 40 is configured by including a buffer circuit which buffers the second control pulse signal S2.

The sawtooth wave reset signal generator 44 generates a pulse in a sawtooth wave reset signal, $S_{rs}$, to be outputted to the PWM signal generator 34, which is synchronized with the switching between high and low levels of the inverter signal $S_{INV}$. The width of this pulse, which is smaller than the cycle of the PWM signal $S_{PWM}$ (the inverse of the PWM frequency f2), is set smaller than 25% of the cycle, for instance.

The after-switching assistant period determining unit 46 receives the inverter signal $S_{INV}$, the sawtooth wave signal $S_{SAN}$ of about 40 kHz, which is required for the generation of a base clock of the control circuit 10, and the current sensing signal $S_{IL}$. And the after-switching assistant period determining unit 46 sets the length T2 of the after-switching assistant period PT1 in such a manner that the greater the lamp current IL immediately before the switching between the first state $\phi1$ and the second state $\phi2$ is, the shorter the length T2 thereof is set. The after-switching assistant period determining unit 46 outputs the after-switching assistant period determining signal $S_{PT1}$ which is asserted (goes high) during the after-switching assistant period PT1 after the level of the inverter signal $S_{INV}$ has been switched, to the PWM signal generator 34. Also, the after-switching assistant period determining unit 46 sets a predetermined upper limit $T_{MAX}$ to the length T2 of the after-switching assistant period PT1.

The upper limit $T_{MAX}$, which is less than one tenth of the lighting cycle T1, is set to the inverse (resonance cycle) of a resonance frequency f3 determined by the following Equation (1) where C is the capacitance of the output capacitor of the DC-DC converter and L is the inductance of the secondary coil 26 of the starter transformer 22.

$$f3 = \frac{1}{2\pi\sqrt{LC}} \quad \text{--- Equation (1)}$$

Further detail of the after-switching assistant determining unit 46 will be discussed later.

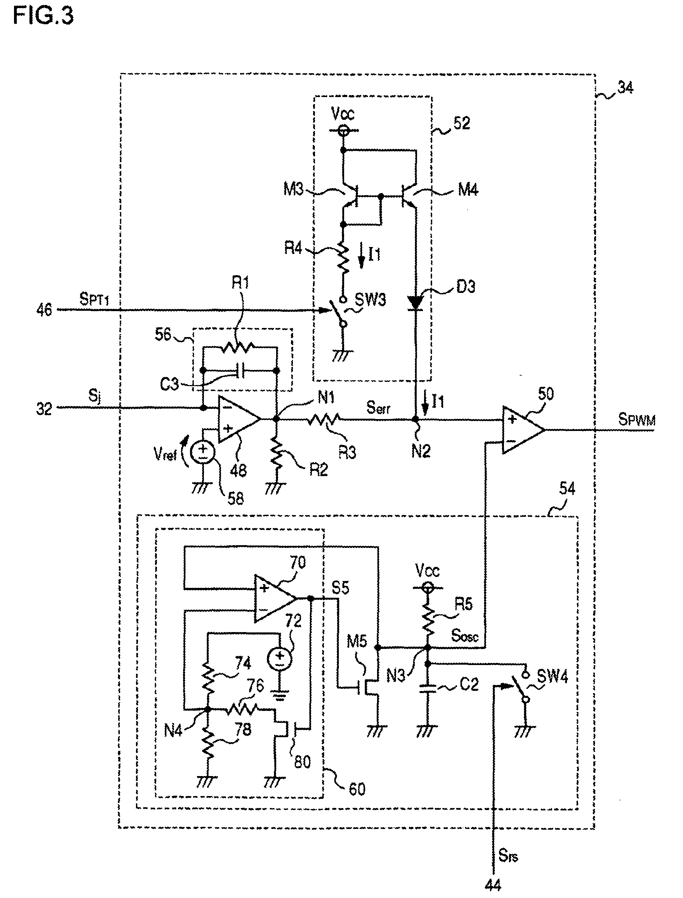

FIG. 3 is a circuit diagram showing a configuration of a PWM signal generator 34. The PWM signal generator 34 includes an error amplifier 48, a PWM comparator 50, a current source 52, a sawtooth wave generating circuit 54, a phase compensation circuit 56, a first reference voltage source 58, a second resistor R2, and a third resistor R3.

The error amplifier 48 amplifies the error between the voltage of the state signal Sj and the reference voltage Vref generated by the first reference voltage source 58, and outputs an error signal $S_{err}$ to the PWM comparator 50 via the third resistor R3. One end of the second resistor R2 is grounded and the other end of the second resistor R2 is connected to a first connection node N1 between an output terminal of the error amplifier 48 and the third resistor R3.

The phase compensation circuit 56 compensates the phase of the error signal $S_{err}$ for the phase of the state signal Sj so as to prevent the oscillation of the control circuit 10. The phase compensation circuit 56 includes a phase compensation capacitor C3 and a first resistor R1 which are connected in parallel with each other between the first connection node N1 and an input terminal of the error amplifier 48 to which the state signal Sj is inputted.

In order to prevent the oscillation of the control circuit 10, a time constant T3 of the phase compensation circuit 56 is set longer than the inverse of the PWM frequency f2 of PWM signal $S_{PWM}$. Thus it is preferable that a signal used to increase temporarily the output power of the DC-DC converter in the first period $\phi1$ or the second period $\phi2$ be modulated at a stage subsequent to the error amplifier 48. This is because the phase compensation circuit 56 has a long time constant T3 at a stage prior thereto and therefore it is difficult to obtain a sufficiently fast response speed there.

During the after-switching assistant period PT1 after the level of the inverter signal $S_{INV}$ has been switched, an offset generation current I1 is supplied to a second node N2 of the third resistor R3 and an input terminal of the PWM comparator 50 from the current source 52. At this time, an offset voltage $V_{off}$, which is equal to R3·I1, is added to the voltage of error signal $S_{err}$.

The current source 52 supplies the offset generation current I1 to the second connection node N2 while the after-switching assistant period determining signal $S_{PT1}$ is high. The current source 52 includes a reference-side bipolar transistor M3, an output-side bipolar transistor M4, a fourth resistor R4, a third switch SW3, and a third rectifier diode D3. The reference-side bipolar transistor M3, the output-side bipolar transistor M4 and the fourth resistor R4 constitute a so-called current mirror circuit configuration. A power supply voltage Vcc is applied to a collector of the reference-side bipolar transistor M3 and a collector of the output-side bipolar transistor M4.

One end of the fourth resistor R4 is connected to an emitter of the reference-side bipolar transistor M3. The third switch SW3 is connected to the other end of the fourth resistor R4. The third switch SW3, which is controlled by the after-switching assistant period determining signal $S_{PT1}$, turns on while the after-switching assistant period determining signal $S_{PT1}$ is high.

As the third switch SW3 turns on, the other end of the fourth resistor R4 is grounded and the offset generation current I1 flows through the fourth resistor R4. Then the offset generation current I1 is supplied from an emitter of the output-side bipolar transistor M4 to the first connection node N1 via the third rectifier diode D3 and the third resistor R3. An anode of the third rectifier diode D3 is connected to the emitter of the output-side bipolar transistor M4, whereas a cathode thereof is connected to the second connection node N2.

The sawtooth wave generating circuit 54 generates a periodical signal $S_{osc}$, of sawtooth waveform, having a PWM frequency f2. As a pulse appears in the sawtooth wave reset signal $S_{rs}$, the sawtooth wave generating circuit 54 sets the periodical signal $S_{osc}$ to the initial state (the beginning of a lamp, for instance).

The sawtooth wave generating circuit 54 includes a PWM clock 60, a sawtooth wave generation switch M5, a fifth resistor R5, a sawtooth wave capacitor C2, and a fourth switch SW4.

The fifth resistor R5 and the sawtooth wave capacitor C2 are connected in series between the power supply voltage Vcc and the ground potential. The sawtooth wave generation switch M5 is connected to a third connection node N3 of the fifth resistor R5 and the sawtooth wave capacitor C2. The sawtooth wave generation switch M5 is turned on by a pulse signal S5 having the PWM frequency f2 generated by the PWM clock 60 which is a self-excited oscillator. As the sawtooth wave generation switch M5 is turned on, the sawtooth wave capacitor C2 is discharged and the third connection node N3 becomes the ground potential (initial state). The sawtooth-waveform periodical signal $S_{osc}$ occurring in the third connection node N3 is inputted to the PWM comparator 50. The periodical signal $S_{osc}$ is fed back to the PWM clock 60.

When a pulse appears in the sawtooth wave reset signal $S_{rs}$, the fourth switch SW4 turns on and, as a result, the sawtooth wave capacitor C2 is discharged.

The PWM clock 60 has a clock comparator 70, a second reference voltage source 72, a first clock resistor 74, a second clock resistor 76, a third clock resistor 78, and a clock switch 80. The first clock resistor 74 and the third clock resistor 78 are connected in series between the second reference voltage source 72 and ground. An inverting input terminal of the clock comparator 70 and one end of the second clock resistor 76 are connected to a fourth connection node N4 of the first clock resistor 74 and the third clock resistor 78. The other end of the second clock resistor 76 is connected to the ground terminal via the clock switch 80. The periodical signal $S_{osc}$, which is fed back to the PWM clock 60, is inputted to a non-inverting input terminal of the clock comparator 70. The clock comparator 70 outputs the pulse signal S5 to a gate of the sawtooth wave generation switch M5 and a gate of the clock switch 80.

The PWM comparator 50 generates the PWM signal $S_{PWM}$ by slicing the periodic signal $S_{osc}$ with the voltage of the error signal $S_{err}$. When the offset voltage $V_{off}$ is added to the voltage of the error signal $S_{err}$ due to the offset generation current I1, the duty ratio of the PWM signal $S_{PWM}$ changes in a direction where the output power of the DC-DC comparator increases. In this case, the on-period of the PWM signal $S_{PWM}$ increases by the length of a period corresponding to the offset voltage $V_{off}$.

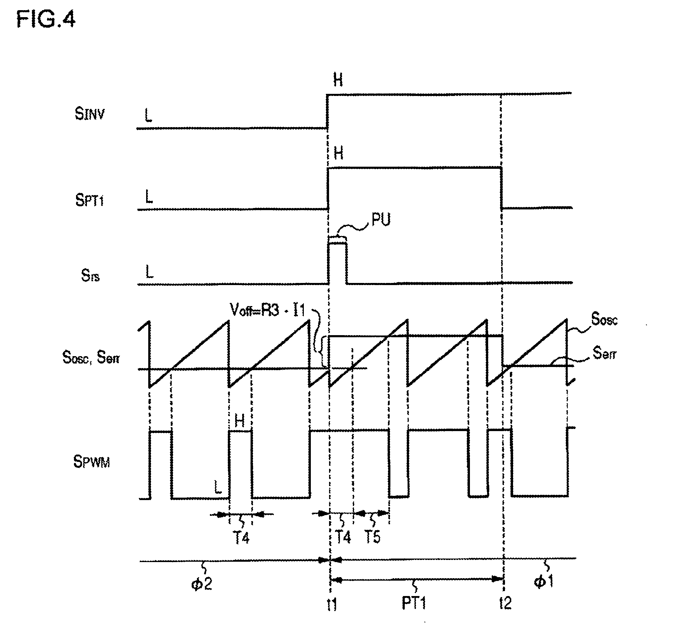

FIG. 4 is a timing chart showing waveforms in the PWM signal generator 34 of FIG. 3. The vertical axis and the horizontal axis in FIG. 4 are scaled as appropriate for ease of understanding, and each waveform shown in FIG. 4 is simplified for easier understanding. Shown in FIG. 4 starting from the top are the inverter signal $S_{INV}$, the after-switching assistant period determining signal $S_{PT1}$, the sawtooth wave reset signal $S_{rs}$, the error signal $S_{err}$ and the periodic signal $S_{osc}$, and the PWM signal $S_{PWM}$.

Note that the symbols indicating the time such as t1 and t2 are given different meanings in each of the subsequent Figures.

At time t1, the inverter signal $S_{INV}$ is switched from a low level to a high level, and DC-DC converter is switched from the second state φ2 to the first state φ1.

Before time t1, no offset generation current I1 has been generated, and the PWM signal $S_{PWM}$ has normal on-periods T4 based on the voltage of the error signal $S_{err}$ generated by the error amplifier 48. Since the state where the drive power PL has been stabilized is considered here, there is almost no difference between the drive power PL and the target power Pt, and the normal on-period T4 corresponds to the target power Pt.

At time t1, the after-switching assistant period determining signal $S_{PT1}$ goes high and the offset generation current I1 is supplied to the second connection node N2. Then an offset voltage $V_{off}$, which is equal to R3·I1, is added to the error signal $S_{err}$. At time t1, a pulse PU appears in the sawtooth wave reset signal $S_{rs}$ and the sawtooth wave capacitor C2 is discharged, so that the periodical signal $S_{osc}$ returns to the beginning of a lamp. This starts the on-period of the first switching element M1 from the time t1.

During the after-switching assistant period PT1 starting from the time t1, the PWM signal $S_{PWM}$ has an on-period of (T4+T5) which is the sum of the normal on-period T4 and an additional on-period T5 corresponding to the offset voltage $V_{off}$. Since the on-period is longer as compared with before the time t1, the power outputted by the first DC-DC converter CONV1 is larger accordingly and therefore a higher restriking compensation voltage occurs across the first output capacitor Co1.

When the after-switching assistant period determining signal $S_{PT1}$ goes low at time t2, the after-switching assistant period PT1 ends. Also, at time t2 the current source 52 stops the supply of the offset generation current I1, so that the duty ratio of the PWM signal $S_{PWM}$ becomes the same as the normal on-period T4 before the time t1.

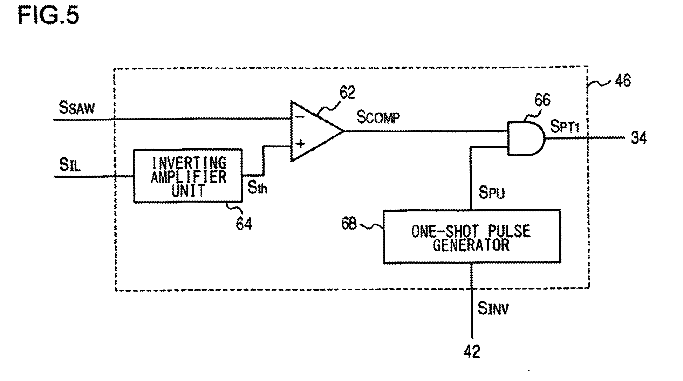

FIG. 5 is a circuit diagram showing a configuration of an after-switching assistant period determining unit 46. The after-switching assistant period determining unit 46 includes a comparator 62, an inverting amplifier unit 64, an AND gate 66, and a one-shot pulse generator 68.

The inverting amplifier unit 64 receives the current sensing signal $S_{IL}$ and outputs a threshold signal $S_{th}$ to a non-inverting input terminal of the comparator 62. Here, the threshold signal $S_{th}$ is a signal such that the larger the lamp current IL is, the lower the voltage of the threshold signal $S_{th}$ is. Assume herein that the response speed of the current sensing signal $S_{IL}$ is sufficiently slower than the PWM frequency f2 and does not reflect the change of the lamp current IL at the switching of polarity.

The sawtooth wave signal $S_{SAW}$ is inputted to an inverting input terminal of the comparator 62. The comparator 62 compares the voltage of the sawtooth wave signal $S_{SAW}$ with that of threshold signal $8_{th}$, and outputs a comparator output signal $S_{COMP}$. Here, the comparator output signal $S_{COMP}$ goes high when the voltage of the threshold signal $S_{th}$ is higher than that of the sawtooth wave signal $S_{SAW}$.

The one-shot pulse generator 68 detects a rising edge or falling edge of the inverter signal $S_{INV}$ and generates a one-shot pulse in a one-shot pulse signal $S_{PU}$ at the detection timing. The width of this one-shot pulse is the aforementioned upper limit $T_{MAX}$ which is set smaller than or equal to the cycle of the base clock of the sawtooth wave signal $S_{SAW}$.

The AND gate 66 outputs the after-switching assistant period determining signal $S_{PT1}$ which is the logical product of the comparator output signal $S_{COMP}$ and the one-shot pulse signal $S_{PU}$.

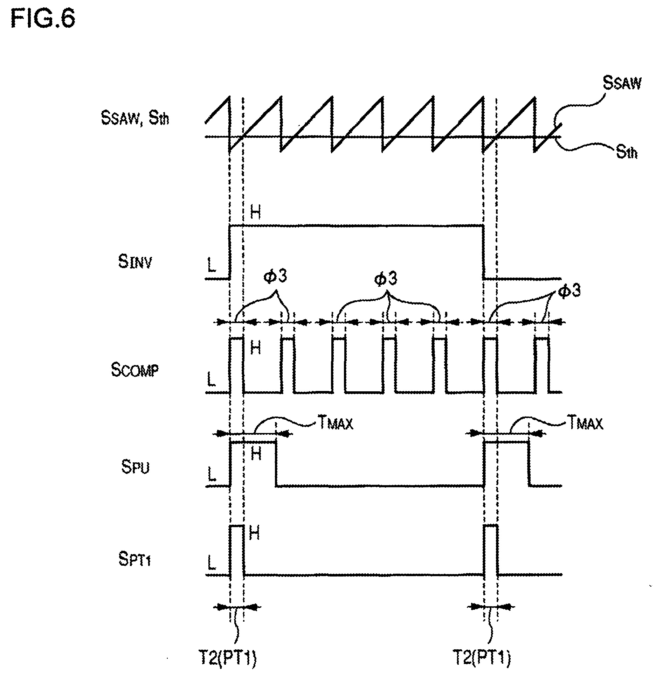

FIG. 6 is a timing chart showing waveforms in the after-switching assistant period determining unit 46 of FIG. 5. The vertical axis and the horizontal axis in FIG. 6 are scaled as appropriate for ease of understanding, and each waveform shown in FIG. 6 is simplified for easier understanding. Shown in FIG. 6 starting from the top are the sawtooth wave signal $S_{SAW}$ and threshold signal $S_{th}$, the inverter signal $S_{INV}$, the comparator output signal $S_{COMP}$, the one-shot pulse signal $S_{PU}$, and the after-switching assistant period determining signal $S_{PT1}$.

Since the inverter signal $S_{INV}$ is generated based on the sawtooth wave signal $S_{SAW}$, the edge of the inverter signal $S_{INV}$ coincides with that of the sawtooth wave signal $S_{SAW}$. The comparator output signal $S_{COMF}$ goes high in a period $\phi 3$ during which (the voltage of threshold signal $S_{th}$) > (the voltage of sawtooth wave signal $S_{saw}$).

A pulse, whose width is the upper limit $T_{MAX}$, is generated in the one-shot pulse signal $S_{PU}$ at the timing when the level of the inverter signal $S_{INV}$ is switched. Thus the after-switching assistant period determining signal $S_{PT1}$, which is the logical product of the comparator output signal $S_{COMP}$ and the one-shot pulse signal $S_{PU}$, goes high for the length of T2 starting from the switching of level of the inverter signal $S_{INV}$. This length T2 is equal to the length of the period $\phi 3$ until it reaches the upper limit $T_{MAX}$; the smaller the lamp current IL immediately before the switching between the first state $\phi 1$ and the second state $\phi 2$ is, the longer the length T2 will be. Once the length T2 has reached the upper limit $T_{MAX}$, the length T2 remains at this upper limit $T_{MAX}$ even if the lamp current IL becomes less.

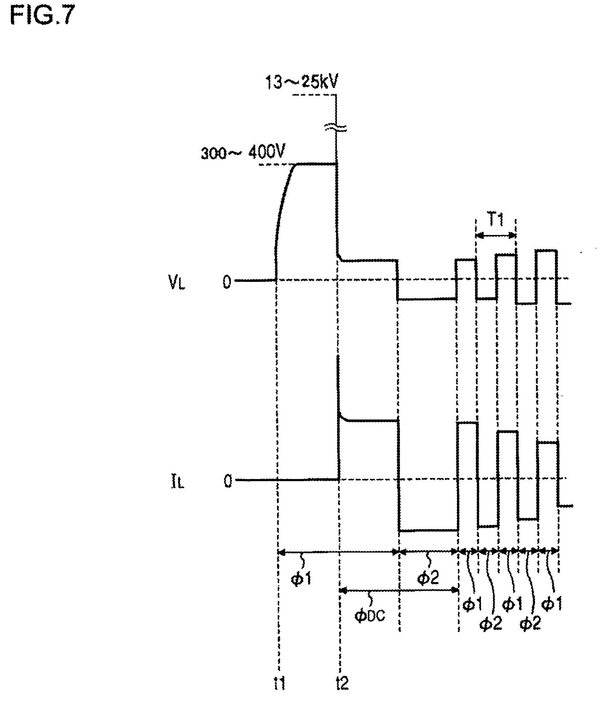

The above has described the configuration of the discharge lamp lighting circuit 100. A description is now given of an operation thereof following the sequences. FIG. 7 is a timing chart showing an operating state of the discharge lamp lighting circuit 100. The vertical axis and the horizontal axis in FIG. 7 are scaled as appropriate for ease of understanding, and each waveform shown in FIG. 7 is simplified for easier understanding.

#### 1. Power on

As a user turns on the power supply switch 8 at time t1, the discharge lamp lighting circuit 100 is started. The control circuit 10 sets the first DC-DC converter CONV1 to the active state and the first switch SW1 to an off state (the first state $\phi 1$), and boosts the battery voltage Vbat to a predetermined high voltage (400 V) and stabilize the boosted voltage.

#### 2. Breakdown

The starter circuit 20 receives the first voltage Vo1 of 400 V generated by the first DC-DC converter CONV1.

The pulse generator 28 applies a pulse voltage of 400 V amplitude to the primary coil 24 of the starter transformer 22. At this time, as shown in FIG. 7 a high-voltage pulse of 20 kV or above occurs in the secondary coil 26 of the starter transformer 22. As a result, the drive voltage of the discharge lamp 4 rises to about 13 to 15 kV and breaks down to start a glow discharge at time t2.

3. DC period $\phi_{DC}$

After a breakdown, the control circuit 10 performs a control of firstly delivering the lamp current IL in the first state $\phi1$, for about 10 ms, in the first polarity. Then the control circuit 10 switches the state to the second state $\phi2$ and performs a control of delivering the lamp current IL for about 10 ms in the second polarity. This period is called a DC period $\phi_{DC}$. In this DC period $\phi_{DC}$, a transition is made from the glow discharge to an arc discharge.

As the arc discharge stabilizes after the DC period $\phi_{DC}$ has ended, the control circuit 10 controls the first DC-DC converter CONV1, the second DC-DC converter CONV2, the first switch SW1 and the second switch SW2 so as to repeat the first state $\phi1$ and the second state $\phi2$ alternately on the cycle T1.

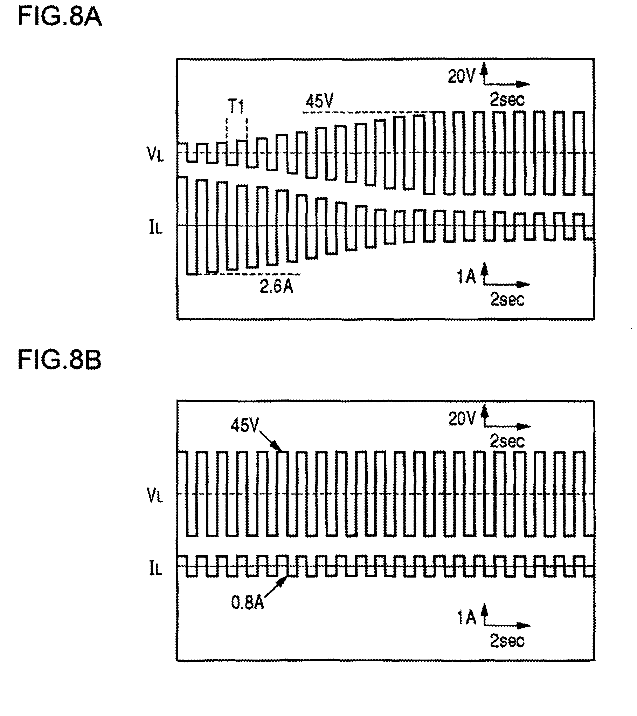

FIGS. 8A and 8B are timing charts showing operating states after the DC period of the discharge lamp lighting circuit 100. The vertical axis and the horizontal axis in FIGS. 8A and 8B are scaled as appropriate for ease of understanding, and each waveform shown in FIGS. 8A and 8B is simplified for easier understanding. FIGS. 8A and 8B show waves in a run-up process and a steady lighting period, respectively.

4. Ran-up

The light output of the discharge lamp 4 rises with growth in the ark discharge. The way the light output rises is specified in a standard. Thus, the control circuit 10 monitors the first output voltage Vo1, the second output voltage Vo2 and the lamp current IL and adjusts, by feedback, the duty ratio of the on and off of the first switching element M1 and the second switching element M2 so that the light output (electric power) complied with the standard can be obtained. The discharge lamp lighting circuit 100 rapidly raises the light output of the discharge lamp 4 in a run-up period and therefore an overpower higher than the rated power is temporarily supplied. After this, the lamp voltage and the lamp current IL are stabilized at approximately 45 V and 0.8 A, respectively, so that the supplied power is brought closer to the rated power (35 W) (See 8A).

5. Steady lighting

As the light output of the discharge lamp 4 has stabilized after going through the run-up process, the power supplied to the discharge lamp 4 is stabilized at the rated value of 35 W (See FIG. 8B). Note that the waveforms of drive voltage VL and lamp current IL shown in FIGS. 8A and 8B, which are presented in a simplified manner for the ease of viewing, practically have a frequency range of 250 Hz to 750 Hz.

The above has described the operation of the discharge lamp lighting circuit 100 according to the first embodiment. This discharge lamp lighting circuit 100 has the following advantages over the conventional discharge lamp lighting circuits.

(1) By employing the discharge lamp lighting circuit 100 according to the first embodiment, the on-period of a switching element of the DC-DC converter is extended for the after-switching assistant period PT1 at the time of switching between the first state $\phi1$ and the second state $\phi2$. As a result, the output power of the DC-DC converter increases, so that a higher restriking compensation voltage can be generated. Therefore the polarity of the lamp current IL can be switched smoothly, and the possibility that the discharge lamp 4 may go out at the time of polarity switching can be reduced.

(2) In order to effectively use a limited space, efforts are continuously made to reduce the size of the discharge lamp lighting circuit for lighting an automotive discharge lamp. When the size of the discharge lamp lighting circuit 100 is to be reduced further, the sizes of the starter circuit 20 and the starter transformer 22 should be made smaller. Consequently, the secondary coil 26 of the starter transformer 22 is reduced in size and therefore the inductance L thereof becomes smaller.

The restriking compensation voltage is determined by the capacitance C of the output capacitor in the DC-DC converter, the inductance L of the secondary coil 26 of the starter transformer 22 and the level of the lamp current IL immediately before the switching between the first state $\phi1$ and the second state $\phi2$. The higher the inductance L of the secondary coil 26 and the lamp current IL are, the higher the restriking compensation voltage will be. Also, the smaller the capacitance C of the output capacitor is, the higher the restriking compensation voltage will be.

Accordingly, the downsizing of the discharge lamp lighting circuit 100 results in a reduced inductance L, so that the restriking compensation voltage may also drop. Nevertheless, the discharge lamp lighting circuit 100 according to the first embodiment helps the polarity of the lamp current IL switch smoothly by the provision of the after-switching assistant period PT1, so that such a reduction in inductance L can be counteracted. Hence, further downsizing of the discharge lamp lighting circuit 100 is feasible.

(3) In the discharge lamp lighting circuit 100 according to the first embodiment, the after-switching assistant period PT1 is set in such a manner that the smaller the lamp current IL is, the longer the after-switching assistant period PT1 is. Hence, if the lamp current IL gets small, the restriking compensation voltage which would otherwise become low can be increased by the provision of a longer after-switching assistant period PT1. As a result, the polarity of the lamp current IL can be smoothly switched even if the lamp current IL is low.

(4) Since, in the after-switching assistant period PT1, the output power of the DC-DC converter is increased above normal, the loss of the power of the discharge lamp lighting circuit 100 as a whole will be larger accordingly. Furthermore, this may adversely affect the control of the drive power PL by the control circuit 10. In the light of the foregoing circumstances, in the discharge lamp lighting circuit 100 according to the first embodiment, the setting is done such that the after-switching assistant period PT1 becomes shorter if the lamp current IL is large. Thus, the after-switching assistant period PT1 can be shortened if the lamp current IL is large and the required restriking compensation voltage can be obtained in a short period of time, As a result the unnecessary loss of power can be reduced and a stabilized control can be achieved.

(5) The upper limit $T_{MAX}$, which is less than one tenth of the lighting cycle T1, is preset in the length T2 of the after-switching assistant period PT1. Thus the loss of power can also be reduced and the stabilized control can also be achieved.

(6) It is found through theoretical analysis and actual experiments conducted by the present inventors that the lamp current IL oftentimes passes through zero when about 1/4 of the resonance cycle has elapsed after the switching between the first state $\phi1$ and the second state $\phi2$. In order to prevent discharge lamp 4 from going out, it is only necessary that the restriking compensation voltage be generated at a point close to where the lamp current IL passes through zero. In the discharge lamp lighting circuit 100 according to the first embodiment, the upper limit $T_{MAX}$ is set to the resonance cycle. Thus, even allowing for variations that may occur at the time of manufacturing the discharge lamp lighting circuits 100, the lamp current IL is assured to pass through zero during the after-switching assistant period PT1 and the phenomenon that the after-switching assistant period PT1 gets longer than is necessary can be prevented.

(7) As shown in FIG. 4, at the beginning of the after-switching assistant period PT1, namely at an edge of the inverter signal $S_{INV}$, the periodic signal $S_{OSC}$ is returned to the initial state. This may be rephrased as follows. That is, the periodic signal $S_{OSC}$ and the inverter signal $S_{INV}$ are synchronised. This makes the restriking compensation voltage occurring in the after-switching assistant period PT1 less influenced by the phase of the periodic signal $S_{OSC}$, so that further stabilized polarity-switching characteristics can be achieved

In the first embodiment, a description has been given of a case where the discharge lamp lighting circuit 100 is a so-called double converter type discharge lamp lighting circuit equipped with the first DC-DC converter CONV1 and the second DC-DC converter CONV2. However, this should not be considered as limiting and, for example, the discharge lamp lighting circuit may be a so-called single converter type discharge lamp lighting circuit where the first drive voltage Vo1 supplied by the first DC-DC converter CONV1 is AC-converted by an H-bridge circuit so as to be applied to the discharge lamp 4. In this single converter type discharge lamp lighting circuit, the first DC-DC converter CONV1 and the H-bridge circuit form a drive voltage generating unit. This single converter type discharge lamp lighting circuit includes a control circuit similar to the control circuit 10 in the discharge lamp lighting circuit 100 according to the first embodiment. This control circuit included in the single converter type discharge lamp lighting circuit performs a control such that the drive power supplied to the discharge lamp by the first DC-DC converter CONV1 is raised to a level higher than a predetermined target power in a period from when the H-bridge circuit is set to switch the polarity of the drive voltage to a predetermined after-switching assistant period elapses. In this case, too, the same advantageous effects as those described in the first embodiment are achieved.

Note that, in the single converter type discharge lamp lighting circuit, the output capacitor of the DC-DC converter remains charged even at the switching of polarity. Thus the restriking compensation voltage is generated in such a manner that a voltage is further added to the already-charged voltage. In the double converter type discharge lamp lighting circuit as described in the first embodiment, however, the second switch SW2 is on before the first state $\phi1$ is switched to the second state $\phi2$, for instance, and therefore the second output capacitor Co2 of the second DC-DC converter CONV2 is not charged. After the first state $\phi1$ is switched to the second state $\phi2$, the striking compensation voltage starts to be charged from the state of no charging. Thus, the problem concerning the lamp going off at the switching of polarity may become more conspicuous, as compared with the single converter type discharge lamp lighting circuit. Under this circumstance, it proves more useful in the double converter type discharge lamp lighting circuit that the switching of polarity of the lamp current IL is carried out smoothly by the provision of the after-switching assistant period PT1 which temporarily increases the output power of the DC-DC converter as in the first embodiment.

(Second embodiment)

In the discharge lamp lighting circuit 100 according to the first embodiment, the after-switching assistant period PT1 used to prevent discharge lamp 4 from going out is provided after the switching between the first state φ1 and the second state φ2. In a discharge lamp lighting circuit 200 according to a second embodiment, a predetermined before-switching assistant period PT2 is provided before the switching between the first state φ1 and the second state φ2. During this before-switching assistant period PT2, the output capacitor of the DC-DC converter which is in the non-active state is charged. This raises the restriking compensation voltage and reduces the possibility that the discharge lamp 4 may go off.

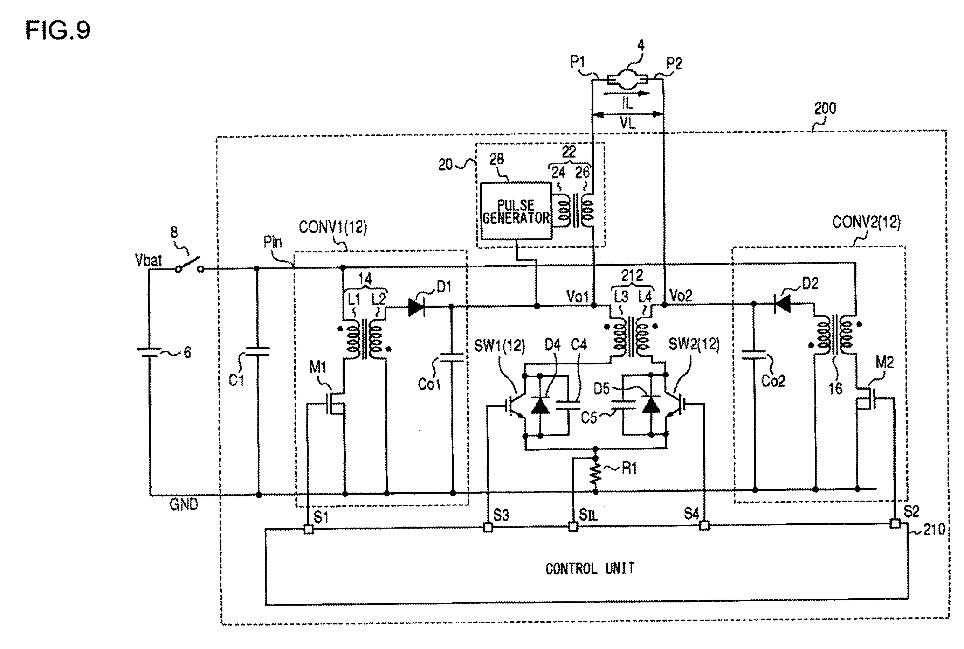

FIG. 9 is a circuit diagram showing a configuration of a discharge lamp lighting circuit 200 according to the second embodiment of the present invention and its constituent members and components connected thereto. The discharge lamp lighting circuit 200 includes a first DC-DC converter CONV1, a second DC-DC converter CONV2, a control circuit 210, a starter circuit 20, a first switch SW1, a second switch SW2, a first resistor R1, an input capacitor C1, a regeneration transformer 212, a first switching diode D4, a second switching diode D5, a first voltage protection capacitor C4, and a second voltage protection capacitor C5. The differences from the first embodiment will be mainly described hereinbelow.

When the DC-DC converter to be set in the active state is switched, the regeneration transformer 212 sends the power charged in the output capacitor of the DC-DC converter which is in the active state before the switching, into the output capacitor thereof which is in the active state after the switching.

One coil L3 of the regeneration transformer 212 is connected between the first switch SW1 and a high-voltage-side (first-output-voltage-Vo1-side) terminal of the first output capacitor Co1. Similarly, the other coil L4 of the regeneration transformer 212 is connected between the second switch SW2 and a high-voltage-side (second-output-voltage-Vo2-side) terminal of the second output capacitor Co2.

Now consider a case where the state is switched from the first state φ1 to the second state φ2. As the first switch SW1 turns on, a regenerative current (not shown in FIG. 9) flows to the ground from the first output capacitor Co1, which has formerly been charged, via the one coil L3 of the regeneration transformer 212. Then an induction voltage occurs in the other coil L4 of the regeneration transformer 212 in a direction where the second output capacitor Co2 is charged, so that the second output capacitor Co2 is charged. In this case, the second switch SW2 is off but the current with which to charge the second output capacitor Co2 is supplied from the ground via the second switching diode D5. The similar operation to the above applies to the case where the state is switched from the second state φ2 to the first state φ1.

The first switching diode D4 and the first voltage protection capacitor C4 are connected in parallel with the first switch SW1. A cathode of the first switching diode D4 is connected to the one coil L3 of the regeneration transformer 212. The first voltage protection capacitor C4 is provided for the purpose of preventing a voltage exceeding a withstand voltage from being applied to the first switch SM1 when the power is to be regenerated from the second output capacitor Co2 to the first output capacitor Co1.

The second switching diode D5 and the second voltage protection capacitor C5 are connected in parallel with the second switch SW2. A cathode of the second switching diode D5 is connected to the other coil L4 thereof. The second voltage protection capacitor C5 is provided for the purpose of preventing a voltage exceeding the withstand voltage from being applied to the second switch SW2 when the power is to be regenerated from the first output capacitor Co1 to the second output capacitor Co2.

The first switching diode D4 and the second switching diode D5 are each preferably a high-speed diode having a shorter reverse recovery time. This is because the fast diode enhances the regeneration effect.

The control circuit 210 outputs a first control pulse signal S1, a second control pulse signal S2, a first control signal S3 and a second control signal S4 to the first switching element M1, the second switching element M2, the first switch SW1 and the second switch SW2, respectively. The control circuit 210 performs a control such that the first state φ1 and the second state φ2 are repeated at a lighting frequency f1.

The control circuit 210 adjusts the duty ratio of high level and low level of the first pulse signal S1 and the second control pulse signal S2 by feedback based on the electrical state of the discharge lamp 4.

In the before-switching assistant period PT2 before the DC-DC converter to be set in the active state is switched, the control circuit 210 turns off both the first switch SW1 and the second switch SW2 while the output capacitor of the DC-DC converter which is in the non-active state is charged to a predetermined charging voltage level. The charging voltage is a voltage required to obtain a restriking compensation voltage which is sufficient enough to prevent the discharge lamp 4 from going out, and the thus required charging voltage is determined through experiments. For example, the charging voltage is set so that the output voltage of the DC-DC converter in the active state is about 100 V when the lamp current IL crosses zero after the switching between the first state φ1 and the second state φ2.

In other words, from a viewpoint of the length of the before-switching assistant period PT2, the length of the before-switching assistant period PT2 is set to a length such that the output capacitor of the DC-DC converter in the non-active state can be charged to the charging voltage required to obtain a restriking compensation voltage which is enough to prevent the discharge lamp 4 from going off.

In the before-switching assistant period PT2, the on-period of the switching element of the DC-DC converter which is in the active state is extended longer than that prior to the before-switching assistant period PT2. As a result, the output power of the DC-DC converter which is in the active sate increases, so that the charging speed of the output capacitor of the DC-DC converter in the non-active state increases and therefore a higher restriking compensation voltage can be generated.

In a process from the breakdown of the discharge lamp 4 leading to the steady lighting thereof, the control circuit 210 performs a control of gradually extending the before-switching assistant period PT2. Its details will be discussed later.

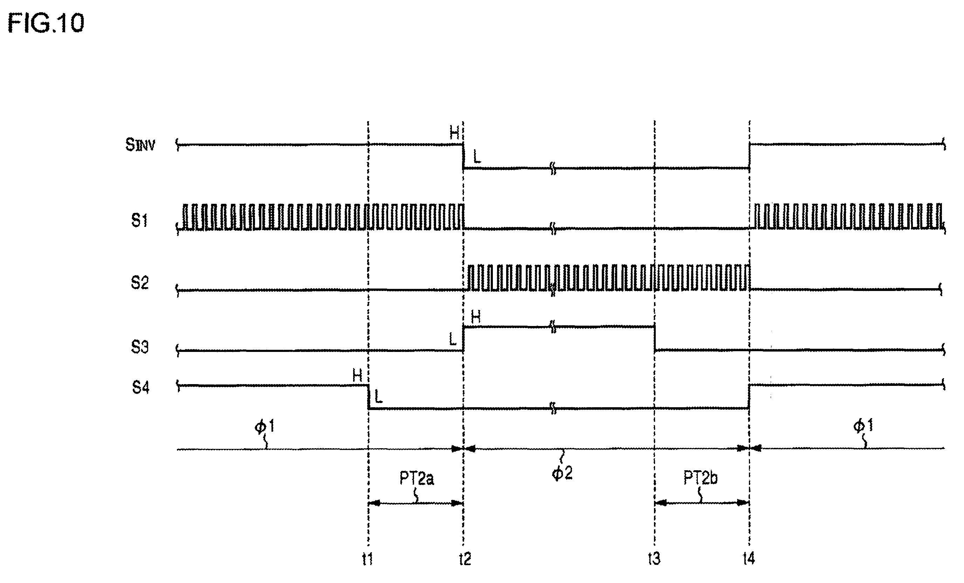

The above has described the structure of the discharge lamp lighting circuit 200. A description is now given of an operation thereof following the sequences. FIG. 10 is a timing chart showing waveforms in the discharge lamp lighting circuit 200 of FIG. 9. The vertical axis and the horizontal axis in FIG. 10 are scaled as appropriate for ease of understanding, and each waveform shown in FIG. 10 is simplified for easier understanding. Shown in FIG. 10 starting from the top are the inverter signal $S_{INV}$, the first control pulse signal S1, the second control pulse signal S2, the first control signal S3, and the second control signal S4.

At time t1, a before-switching assistant period PT2a starts. The pulse width of the first control pulse signal S1 (the on-period of the first switching element M1) in this before-switching assistant period PT2a is longer than the pulse widths before PT2a. Also, the second control signal S4 goes low from high and the second switch SW2 turns off. As a result, the first DC-DC converter CONV1 charges the second output capacitor Co2 to the charging voltage with a higher output power.

At time t2, the before-switching assistant period PT2a ends and the inverter signal $S_{INV}$ is switched from a high level to a low level. The first control pulse signal S1 is fixed to the low level, and the second control pulse signal S2 becomes a pulse-width modulated signal. The first control signal S3 goes high from low and the first switch SW1 turns on. After the time t2, a voltage corresponding to the sum of the charging voltage charged by the first DC-DC converter CONV1 in the before-switching assistant period PT2a and the regenerative voltage generated by the power regenerated from the first output capacitor Co1 via the regeneration transformer 212 occurs in the second output capacitor Co2 as the restriking compensation voltage when the lamp current IL changes its polarity.

At time t3, a before-switching assistant period PT2b starts. The pulse width of the second control pulse signal S2 (the on-period of the second switching element M2) in this before-switching assistant period PT2b is longer than the pulse widths before PT2b. Also, the first control signal S3 goes low from high and the first switch SW1 turns off. As a result, the second DC-DC converter CONV2 charges the first output capacitor Co1 to the charging voltage with a higher output power.

At time t4, the before-switching assistant period PT2b ends and the inverter signal $S_{INV}$ is switched from the low level to the high level. The second control pulse signal S2 is fixed to the low level, and the first control pulse signal S1, becomes a pulse-width modulated signal. The second control signal S4 goes high from low and the second switch SW2 turns on.

After the time t4, a voltage corresponding to the sum of the charging voltage charged by the second DC-DC converter CONV2 in the before-switching assistant period PT2b and the regenerative voltage generated by the power regenerated from the second output capacitor Co2 via the regeneration transformer 212 occurs in the first output capacitor Co1 as the restriking compensation voltage when the lamp current IL changes its polarity.

The above has described the operation of the discharge lamp lighting circuit 200 according to the second embodiment. This discharge lamp lighting circuit 200 has the following advantages over the conventional discharge lamp lighting circuits.

(8) By employing the discharge lamp lighting circuit 200 according to the second embodiment, the before-switching assistant period PT2 is provided before the switching between the first state φ1 and the second state φ2. During the before-switching assistant period PT2, both the first switch SW1 and the second switch SW2 are turned off. Thus, the output capacitor of the DC-DC converter which is in the non-active state can be charged before the switching between the first state φ1 and the second state φ2. As a result, at the time of polarity switching in the lamp current IL, the restriking compensation voltage can be increased by the amount of voltage thus charged and therefore the possibility that the discharge lamp 4 may go out at the time of polarity switching can be reduced.

(9) The power is regenerated, via the regeneration transformer 212, between the first output capacitor Co1 and the second output capacitor Co2. Thus the electric efficiency of the discharge lamp lighting circuit 200 as a whole can be improved and the restriking compensation voltage can be increased by the amount of power thus regenerated.

In the before-switching assistant period PT2, the output capacitor of the DC-DC converter which is in the active state is charged further. This means that the power regenerated through the regeneration transformer 212 is the total of the power stored prior to the before-switching assistant period PT2 and the power charged during the before-switching assistant period PT2. As a result, the restriking compensation voltage can be increased more efficiently. This is a synergistic effect achieved by the provision of a period, during which the both the first switch SW1 and the second switch SW2 are turned off, combined with the provision of the regeneration transformer 212.

(10) The regeneration transformer 212 is connected on a discharge path of the output capacitors, so that the current flowing through the first switch SW1 and the second switch SW2 can be restricted.

The present inventors carried out the following experiments concerning the length of the before-switching assistant period PT2.

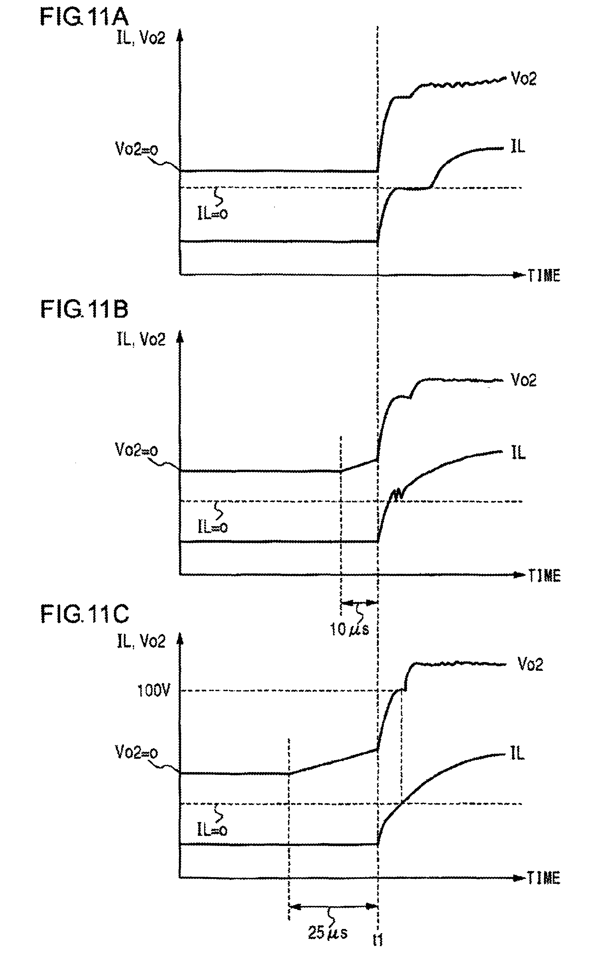

FIGS. 11A, 11B and 11C are graphs showing how the polarity of the lamp current IL is switched when the lengths of before-switching assistant period PT2 are set to 0 μs, 10 μs and 25 μs, respectively. In FIGS. 11A, 11B and 11C, the horizontal axis represents time, whereas the vertical axis represents the levels of the lamp current IL and the second output voltage Vo2. FIGS. 11A, 11B and 11C show waveforms when the state is switched from the first state ϕ1 to the second state ϕ2 at time t1.

The graphs shown in FIGS. 11A, 11B and 11C are based on actual measurement values obtained by the present inventors. Among the elements that the present inventors used in the experiments, the parameters for the main elements are as follows.

Co1 = Co2 = 0.22 μF

The inductance of the secondary coil 26 is 1 mH.

The mutual inductance of the regeneration transformer 212 is 40 μH

FIG. 11A shows how the polarity of lamp current IL is switched when the length of before-switching assistant period PT2 is set to 0 μs. As shown in FIG. 11A, there is an interval where the lamp current IL becomes constant in the vicinity of 0 A at the switching of polarity and therefore it is hard to conclude that the polarity is switched smoothly.

FIG. 11B shows how the polarity of lamp current IL is switched when the length of before-switching assistant period PT2 is set to 10 μs. Although the interval where the lamp current IL becomes constant in the vicinity of 0 A is nearly eliminated, the lamp current IL fluctuates in the vicinity of 0 A and therefore it is also hard to conclude that the polarity is switched smoothly.

FIG. 11C shows how the polarity of lamp current IL is switched when the length of before-switching assistant period PT2 is set to 25 μs. In this case, the lamp current IL smoothly crosses zero, which is suited for the switching of polarity. In particular, the second output voltage Vo2 is about 100 V when the lamp current IL is 0 A. Based on these experimental results, the present inventors had found out that the length of the before-switching assistant period PT2 at the steady lighting is preferably 25 μs or longer.

Note that if the before-switching assistant period PT2 to be set is unduly long, the output capacitor of the DC-DC converter which is in the active state will be charged more than necessary, which is not preferred in light of withstand voltage characteristics of elements.

If the before-switching assistant period PT2 is always provided before the switching between the first state ϕ1 and the second state ϕ2, the control performed by the control circuit 210 will be simplified. At the same time, if the before-switching assistant period PT2 is provided in the run-up period, the output power may rise temporarily in this run-up period. In such a case, there is a possibility that a restriking compensation voltage exceeding the withstand voltage of the first switch SW1 or second switch SW2 may occur. Accordingly, there are cases where it is not advisable to always provide the before-switching assistant period PT2 before the switching between the first state ϕ1 and the second state ϕ2. This may be rephrased as follows. That is, it is not always necessary to provide the before-switching assistant period PT2.

Based on the above observation, the control circuit 210 of the discharge lamp lighting circuit 200 performs a control of gradually extending the before-switching assistant period PT2 in a process from the breakdown of the discharge lamp 4 leading to the steady lighting thereof. For example, firstly, the value of the lamp current IL at which an interval is generated where the lamp current IL becomes constant in the vicinity of 0 A at the switching of polarity is determined through experiments. Based on the thus determined value of the current lamp IL, the level of a threshold current higher than the determined value thereof is set. If the lamp current IL is larger than the threshold current, no before-switching assistant period PT2 will be provided. If the lamp current IL is smaller than the threshold current, the before-switching assistant period PT2 will be set such that the larger the difference between the threshold current and the lamp current IL is, the longer the before-switching assistant period PT2 becomes.

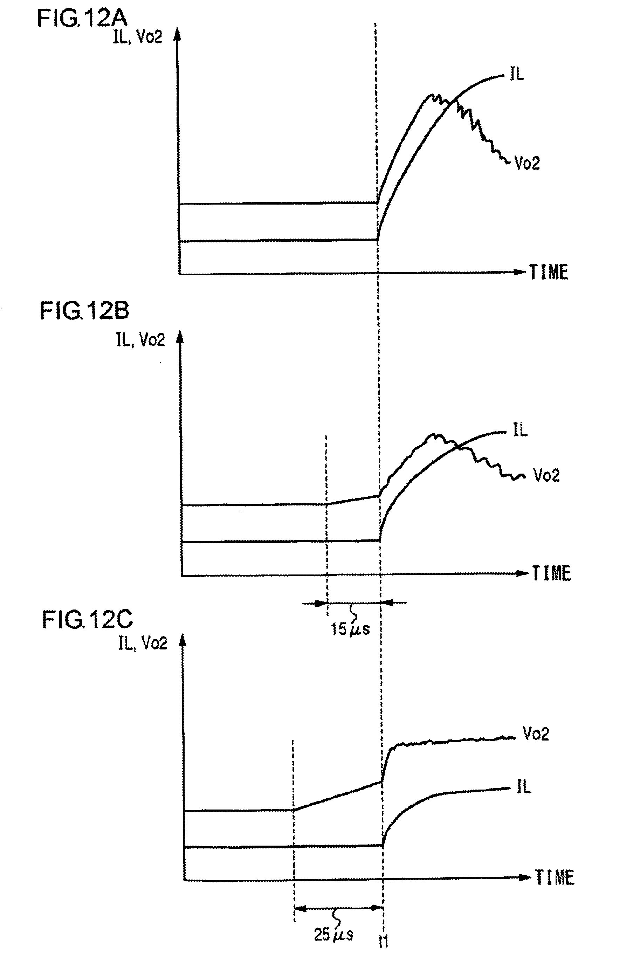

FIGS. 12A, 12B and 12C are graphs showing how the polarity of lamp current IL is switched when the lamp currents IL are 1.5 A, 1 A and 0.5 A, respectively. In FIGS. 12A, 12B and 12C, the horizontal axis represents time, whereas the vertical axis represents the levels of the lamp current IL and the second output voltage Vo2. FIGS. 12A, 12B and 12C show waveforms when the state is switched from the first state ϕ1 to the second state ϕ2 at time t1.

The graphs shown in FIGS. 12A, 12B and 12C are based on the actual measurement values obtained by the present inventors. Among the elements that the present inventors used in the experiments, the parameters for the main elements are similar to those of FIGS. 11A, 11B and 11C. The value of the lamp current IL at which a period during which the lamp current IL becomes constant in the vicinity of 0 A at the switching of polarity is generated is determined to be 0.7 A through the experiments. The threshold current is set to 1 A which is larger than the thus determined value of the lamp current IL (0.7 A).

As shown in FIGS. 12A to 12C, whichever values of the lamp current IL are used, the lamp current IL smoothly crosses zero at the switching of polarity, thereby showing the suitability thereof.

In the first embodiment, a description has been given of a case where the on-period of the first switching element M1 or the second switching element M2 is increased, in the after-switching assistant period PT1, by adding the offset voltage $V_{off}$ to the voltage serving as a threshold value of the PWM comparator 50. However, this should not be considered as limiting and, for example, the period during which the PWM signal $S_{PWM}$ is high may be extended by adjusting the inclination of a ramp of the sawtooth-waveform periodical signal $S_{OSC}$. Also, the function of the PWM signal generator 34 may be realized by the use of a digital circuit or software.

In the first embodiment, a description has been given of a case where the sawtooth wave generating circuit 54 generates the periodical signals $S_{osc}$ of sawtooth waveform. However, this should not be considered as limiting and, for example, the periodical signal $S_{osc}$ may be a signal having a periodical voltage of triangular or sawtooth waveform of the second frequency f2.

In the first and second embodiments, a description has been given of a case where the positive drive voltages Vo1 and Vo2 are generated and then applied to the discharge lamp 4 (called a positive lighting). In a modification, negative drive voltages Vo1 and Vo2 may be generated to drive the discharge lamp 4 (called a negative lighting). In such a case, the conducting directions of the first rectifier diode D1, the second rectifier diode D2, the first switching diode D4 and the second switching diode D5, the polarities of secondary windings of the first and second transformers 14 and 16, and the switching directions of the switching elements M1 and M2 connected respectively to the secondary winding sides of the first and second transformers 14 and 16 in FIG. 1 and FIG. 9 may be reversed.

A microcomputer may be used in the control circuit or a part of the control circuit according to the first and second embodiments.

In the first embodiment, a description has been given of a case where, in the double converter type discharge lamp lighting circuit 100, the after-switching assistant period PT1 is provided after the switching between the first state φ1 and the second state φ2. Also, in the second embodiment, a description has been given of a case where, in the double converter type discharge lamp lighting circuit 200, the before-switching assistant period PT2 is provided before the switching between the first state φ1 and the second state φ2. However, this should not be considered as limiting and, in a double converter type discharge lamp lighting circuit, a structure may be such that the before-switching assistant period PT2 is provided before the switching between the first state φ1 and the second state φ2, and the after-switching assistant period PT1 is provided after the switching therebetween.

Though in the first and second embodiments, the discharge lamp lighting circuit for driving an automotive discharge lamp has been described merely as a example, the applications of the present invention are not limited thereto and are widely applicable to a discharge lamp lighting circuit having two converters that supply power alternately to a discharge lamp.

In the circuits described in the first and second embodiments, the setting of logical values which are high level and low level of a given signal is merely exemplary and may be freely changed by inverting them as appropriate using an inverter or the like.

While embodiments of the present invention have been described the invention extends to the full scope of the appended claims.

**Claims**

1.  A discharge lamp lighting circuit comprising:

    a drive voltage generating unit (12)configured to supply an AC drive voltage to a discharge lamp (4) to be driven, whereby the discharge lamp is supplied with a predetermined target power;
    wherein the drive voltage generating unit (12) comprises a first DC-DC converter (CONV1) configured to supply, in an active state, a first drive voltage to one end of the discharge lamp (4); and
    a second DC-DC converter (CONV2) configured to supply, in an active state, a second drive voltage to the other end of the discharge lamp (4);
    the discharge lamp lighting circuit further comprising :
    a first switch (SW1), arranged to conduct electrical current between the one end of the discharge lamp (4) and a fixed voltage terminal in an ON state; and
    a second switch (SW2), arranged to conduct electrical current between the other end of the discharge lamp (4) and the fixed voltage terminal in an ON state;
    and
    a control unit (10, 210) configured to alternately set the first DC-DC converter (CONV1) and the second DC-DC converter (CONV2) in the active state;
    the discharge lamp lighting circuit **characterised in that**:
    the control unit (10, 210) is configured to perform a control such that drive power supplied to the discharge lamp (4) by the drive voltage generating unit (12) is raised to a level higher than the predetermined target power during an after-switching assistant period (PT1) that starts when the drive voltage generating unit (12) switches the polarity of the drive voltage and ends after a predetermined time,

wherein the control unit (10, 210) is configured to set the length of the after-switching assistant period (PT1) to become shorter the greater the drive current flowing to the lamp (4) before the drive voltage generating unit (12) is set to switch the polarity of the drive voltage.

2. A discharge lamp lighting circuit according to Claim 1,
wherein the control unit (10, 120) starts an on-period of a switching element (M1, M2) of the DC-DC converter in synchronization with the start of the after-switching assistant period (PT1).

3. A discharge lamp lighting circuit according to Claim 1 or Claim 2, wherein a predetermined upper limit is set to the length of the after-switching assistant period (PT1).

4. A discharge lamp lighting circuit according to any one of Claim 1 to Claim 3 wherein in a before-switching assistant period (PT2) that corresponds to a predetermined period before the DC-DC converter to be set in the active state is switched, the control unit (10, 210) turns off both the first switch (SW1) and the second switch (SW2) while an output capacitor (Co1, Co2) of the DC-DC converter which is in the non-active state is charged to a predetermined voltage level.

5. A discharge lamp lighting circuit according to Claim 4, wherein, in the before-switching assistant period (PT2), an on-period of a switching element (M1, M2) of a DC-DC converter (CONV1, CONV2) in the active state is extended longer than that prior to the before-switching assistant period (PT2).

6. A discharge lamp lighting circuit according to Claim 4 or Claim 5, further comprising a regeneration means (212) for regenerating, in the case of a switching of the respective DC-DC converter (CONV1, CONV2) from inactive to active, power charged in the output capacitor (Co1, Co2) of the DC-DC converter (CONV1, CONV2) that was in the active state before switching to inactive, into the output capacitor (Co1, Co2) of the DC-DC converter (CONV1, CONV2) that is to be in the active state after the switching thereof.

7. A discharge lamp lighting circuit according to Claim 6, wherein the regeneration means (212) is arranged on a discharge path of the output capacitor (Co1, Co2) of the DC-DC converter (CONV1, CONV2).

8. A discharge lamp lighting circuit according to any one of Claim 4 to Claim 7, wherein the control unit (10, 210) performs a control such that
when the drive current is larger than a predetermined threshold current, the before-switching assistant period (PT2) is not provided; and
when the drive current is smaller than the threshold current, the before-switching assistant period (PT2) is set in such a manner that the larger a difference between the threshold current and the drive current is, the longer the before-switching assistant period (PT2) becomes.

9. A method for controlling discharge lamp lighting, the method including:

supplying a first drive voltage to one end of a discharge lamp to be driven, by a first DC-DC converter in an active state;
supplying a second drive voltage to the other end of the discharge lamp, by a second DC-DC converter in an active state;
conducting electrical current between the one end of the discharge lamp and a fixed voltage terminal, by a first switch;
conducting electrical current between the other end of the discharge lamp and the fixed voltage terminal, by a second switch, and
alternately setting the first DC-DC converter and the second DC-DC converter in the active state,
**characterised by**: turning off the first switch and the second switch while an output capacitor of the DC-DC converter in an inactive state is charged to a predetermined voltage level, in a before-switching assistant period (PT2) that corresponds to a predetermined period before the DC-DC converter to be set in the active state is switched.

**Patentansprüche**

1. Entladungslampen-Lichtstromkreis mit:

   einer Treiberspannungserzeugungseinheit (12), die konfiguriert ist, eine Wechselstrom-Treiberspannung einer anzutreibenden Entladungslampe (4) zuzuführen, wodurch die Entladungslampe mit einer vorherbestimmten Zielleistung versorgt wird;
   wobei die Treiberspannungserzeugungseinheit (12) einen ersten Gleichstromumrichter (CONV1), der konfiguriert ist, in einem aktiven Zustand einem Ende der Entladungslampe (4) eine erste Treiberspannung zuzuführen, und
   einen zweiten Gleichstromumrichter (CONV2) aufweist, der konfiguriert ist, in einem aktiven Zustand dem anderen Ende der Entladungslampe (4) eine zweite Treiberspannung zuzuführen;
   wobei der Entladungslampen-Lichtstromkreis weiters aufweist:
   einen ersten Schalter (SW1), der eingerichtet ist, in einem EIN-Zustand einen elektrischen Strom zwischen dem einen Ende der Entladungslampe (4) und einem Festspannungsanschluss zu leiten; und
   einen zweiten Schalter (SW2), der eingerichtet ist, in einem EIN-Zustand einen elektrischen Strom zwischen dem anderen Ende der Entladungslampe (4) und dem Festspannungsanschluss zu leiten; und
   eine Steuer- /Regeleinheit (10, 210), die konfiguriert ist, abwechselnd den ersten Gleichstromumrichter (CONV1) und den zweiten Gleichstromumrichter (CONV2) in den aktiven Zustand zu setzen;
   welcher Entladungslampen-Lichtstromkreis **dadurch gekennzeichnet ist, dass** die Steuer- /Regeleinheit (10, 210) konfiguriert ist, eine Steuerung/Regelung derart durchzuführen, dass der Entladungslampe (4) von der Treiberspannungserzeugungseinheit (12) zugeführte Antriebsleistung während einer Nachschalt-Hilfsperiode (PT1), die beginnt, wenn die Treiberspannungserzeugungseinheit (12) die Polarität der Antriebsspannung umschaltet, und die nach einer vorherbestimmten Zeit endet, auf ein Niveau angehoben wird, welches höher als die vorherbestimmte Zielleistung ist,
   wobei die Steuer- /Regeleinheit (10, 210) konfiguriert ist, die Länge der Nachschalt-Hilfsperiode (PT1) so einzustellen, dass sie umso kürzer wird, je höher der zur Lampe (4) fließende Treiberstrom ist, bevor die Treiberspannungserzeugungseinheit (12) angesteuert wird, um die Polarität der Antriebsspannung umzuschalten.

2. Entladungslampen-Lichtstromkreis nach Anspruch 1, wobei die Steuer- /Regeleinheit (10, 120) eine EIN-Periode eines Schaltelements (M1, M2) des Gleichstromumrichters in Synchronisation mit dem Beginn der Nachschalt-Hilfsperiode (PT1) einleitet.

3. Entladungslampen-Lichtstromkreis nach Anspruch 1 oder 2, wobei eine vorherbestimmte Obergrenze auf die Länge der Nachschalt-Hilfsperiode (PT1) festgesetzt wird.

4. Entladungslampen-Lichtstromkreis nach einem der Ansprüche 1 bis 3, wobei die Steuer- /Regeleinheit (10, 210) in einer Vorschalt-Hilfsperiode (PT2), die einer vorherbestimmten Periode vor dem Schalten des in den aktiven Zustand zu setzenden Gleichstromumrichters entspricht, sowohl den ersten Schalter (SW1) als auch den zweiten Schalter (SW2) abschaltet, während ein Ausgangskondensator (Co1, Co2) des im inaktiven Zustand befindlichen Gleichstromumrichters auf ein vorherbestimmtes Spannungsniveau aufgeladen wird.

5. Entladungslampen-Lichtstromkreis nach Anspruch 4, wobei in der Vorschalt-Hilfsperiode (PT2) eine EIN-Periode eines Schaltelements (M1, M2) eines Gleichstromumrichters (CONV1, CONV2) im aktiven Zustand mehr verlängert wird als vor der Vorschalt-Hilfsperiode (PT2).

6. Entladungslampen-Lichtstromkreis nach Anspruch 4 oder 5, weiters mit einem Regenerationsmittel (212) zum Regenerieren, im Fall eines Schaltens des entsprechenden Gleichstromumrichters (CONV1, CONV2) vom inaktiven in den aktiven Zustand, von Leistung, die im Ausgangskondensator (Co1, Co2) des Gleichstromumrichters (CONV1, CONV2) geladen wurde, der sich vor dem Schalten in den inaktiven Zustand im aktiven Zustand befand, in den Ausgangskondensator (Co1, Co2) des Gleichstromumrichters (CONV1, CONV2), der nach dem Schalten desselben im aktiven Zustand sein soll.

7. Entladungslampen-Lichtstromkreis nach Anspruch 6, wobei das Regenerationsmittel (212) an einem Entladepfad des Ausgangskondensators (Co1, Co2) des Gleichstromumrichters (CONV1, CONV2) angeordnet ist.

8. Entladungslampen-Lichtstromkreis nach einem der Ansprüche 4 bis 7, wobei die Steuer- /Regeleinheit (10, 210) eine derartige Steuerung/Regelung durchführt, dass,

wenn der Treiberstrom höher als ein vorherbestimmter Schwellenstrom ist, die Vorschalt-Hilfsperiode (PT2) nicht vorgesehen ist; und

wenn der Treiberstrom geringer als der Schwellenstrom ist, die Vorschalt-Hilfsperiode (PT2) derart eingestellt ist, dass die Vorschalt-Hilfsperiode (PT2) umso länger wird, je größer die Differenz zwischen dem Schwellenstrom und dem Treiberstrom ist.

9. Verfahren zum Steuern/Regeln einer Entladungslampen-Beleuchtung, welches Verfahren umfasst:

Zuführen einer ersten Treiberspannung an ein Ende einer anzutreibenden Entladungslampe durch einen ersten Gleichstromumrichter in einem aktiven Zustand;

Zuführen einer zweiten Treiberspannung an das andere Ende der Entladungslampe durch einen zweiten Gleichstromumrichter in einem aktiven Zustand;

Leiten von elektrischem Strom zwischen dem einen Ende der Entladungslampe und einem Festspannungsanschluss durch einen ersten Schalter;

Leiten von elektrischem Strom zwischen dem anderen Ende der Entladungslampe und dem Festspannungsanschluss durch einen zweiten Schalter; und

alternierendes Setzen des ersten Gleichstromumrichters und des zweiten Gleichstromumrichters in den aktiven Zustand,

**gekennzeichnet durch** Abschalten des ersten Schalters und des zweiten Schalters, während ein Ausgangskondensator des Gleichstromumrichters in einem inaktiven Zustand auf ein vorherbestimmtes Spannungsniveau geladen wird, in einer Vorschalt-Hilfsperiode (PT2), welche einer vorherbestimmten Periode entspricht, bevor der in den aktiven Zustand zu setzende Gleichstromumrichter geschaltet wird.

**Revendications**

1. Circuit d'éclairage de lampe à décharge, comprenant :

une unité de génération de tension d'excitation (12) configurée pour fournir une tension d'excitation alternative à une lampe à décharge (4) destinée à être excitée, moyennant quoi la lampe à décharge est alimentée en une puissance cible prédéterminée ;

dans lequel l'unité de génération de tension d'excitation (12) comprend un premier convertisseur CC-CC (CONV1) configuré pour fournir, dans un état actif, une première tension d'excitation à une première extrémité de la lampe à décharge (4) ; et

un second convertisseur CC-CC (CONV2) configuré pour fournir, dans un état actif, une seconde tension d'excitation à l'autre extrémité de la lampe à décharge (4) ;

le circuit d'éclairage de lampe à décharge comprenant en outre :

un premier commutateur (SW1), agencé pour conduire un courant électrique entre la première extrémité de la lampe à décharge (4) et une borne de tension fixe dans un état de marche ; et

un second commutateur (SW2), agencé pour conduire un courant électrique entre l'autre extrémité de la lampe à décharge (4) et la borne de tension fixe dans un état de marche ; et

une unité de commande (10, 210) configurée pour régler en alternance le premier convertisseur CC-CC (CONV1) et le second convertisseur CC-CC (CONV2) dans l'état actif ;

le circuit d'éclairage de lampe à décharge étant **caractérisé en ce que** :

l'unité de commande (10, 210) est configurée pour réaliser une commande telle qu'une puissance d'excitation fournie à la lampe à décharge (4) par l'unité de génération de tension d'excitation (12) soit augmentée jusqu'à un niveau supérieur à celui de la puissance cible prédéterminée au cours d'une période d'assistance après commutation (PT1) qui commence lorsque l'unité de génération de tension d'excitation (12) commute la polarité de la tension d'excitation et se termine après un temps prédéterminé,

dans lequel l'unité de commande (10, 210) est configurée pour que, plus le courant d'excitation allant jusqu'à la lampe (4), avant que l'unité de génération de tension d'excitation (12) soit réglée pour commuter la polarité de la tension d'excitation, est important, plus la longueur de la période d'assistance après commutation (PT1) est courte.

2. Circuit d'éclairage de lampe à décharge selon la revendication 1,
dans lequel l'unité de commande (10, 120) commence une période de marche d'un élément de commutation (M1, M2) du convertisseur CC-CC en synchronisation avec le commencement de la période d'assistance après commutation (PT1).

3. Circuit d'éclairage de lampe à décharge selon la revendication 1 ou la revendication 2, dans lequel une limite supérieure prédéterminée est réglée à la longueur de la période d'assistance après la commutation (PT1).

4. Circuit d'éclairage de lampe à décharge selon une quelconque de la revendication 1 à la revendication 3, dans lequel, dans une période d'assistance avant commutation (PT2), qui correspond à une période prédéterminée avant que le convertisseur CC-CC destiné à être réglé dans l'état actif soit commuté, l'unité de commande (10, 210) éteint le premier commutateur (SW1) ainsi que le second commutateur (SW2) alors qu'un condensateur de sortie (Co1, Co2) du convertisseur CC-CC qui est dans l'état non actif est chargé jusqu'à un niveau de tension prédéterminé.

5. Circuit d'éclairage de lampe à décharge selon la revendication 4, dans lequel, dans la période d'assistance avant commutation (PT2), une période de marche d'un élément de commutation (M1, M2) d'un convertisseur CC-CC (CONV1, CONV2) dans l'état actif est étendue pour être plus longue que celle avant la période d'assistance avant commutation (PT2).

6. Circuit d'éclairage de lampe à décharge selon la revendication 4 ou la revendication 5, comprenant en outre un moyen de régénération (212) pour régénérer, dans le cas d'une commutation du convertisseur CC-CC respectif (CONV1, CONV2) d'inactif à actif, une puissance chargée dans le condensateur de sortie (Co1, Co2) du convertisseur CC-CC (CONV1, CONV2) qui était dans l'état actif avant la commutation à l'état inactif, dans le condensateur de sortie (Co1, Co2) du convertisseur CC-CC (CONV1, CONV2) qui est destiné à être dans l'état actif après sa commutation.

7. Circuit d'éclairage de lampe à décharge selon la revendication 6, dans lequel le moyen de régénération (212) est agencé sur un trajet de décharge du condensateur de sortie (Co1, Co2) du convertisseur CC-CC (CONV1, CONV2).

8. Circuit d'éclairage de lampe à décharge selon une quelconque de la revendication 4 à la revendication 7, dans lequel l'unité de commande (10, 210) réalise une commande telle que :

   lorsque le courant d'excitation est supérieur à un courant de seuil prédéterminé, la période d'assistance avant commutation (PT2) n'est pas prévue ; et
   lorsque le courant d'excitation est inférieur au courant de seuil, la période d'assistance avant commutation (PT2) est réglée de manière telle que, plus une différence entre le courant de seuil et le courant d'excitation est importante, plus la période d'assistance avant commutation (PT2) est longue.

9. Procédé pour commander un éclairage de lampe à décharge, le procédé comprenant les étapes consistant à :

   fournir une première tension d'excitation à une première extrémité d'une lampe à décharge destinée à être excitée, par l'intermédiaire d'un premier convertisseur CC-CC dans un état actif ;
   fournir une seconde tension d'excitation à l'autre extrémité de la lampe à décharge, par l'intermédiaire d'un second convertisseur CC-CC dans un état actif ;
   conduire un courant électrique entre la première extrémité de la lampe à décharge et une borne de tension fixe, par l'intermédiaire d'un premier commutateur ;
   conduire un courant électrique entre l'autre extrémité de la lampe à décharge et la borne de tension fixe, par l'intermédiaire d'un second commutateur, et
   régler en alternance le premier convertisseur CC-CC et le second convertisseur CC-CC dans l'état actif,
   **caractérisé par** l'étape consistant à éteindre le premier commutateur et le second commutateur alors qu'un condensateur de sortie du convertisseur CC-CC dans un état inactif est chargé jusqu'à un niveau de tension prédéterminé, dans une période d'assistance avant commutation (PT2) qui correspond à une période prédéterminée avant que le convertisseur CC-CC destiné à être réglé dans l'état actif soit commuté.

# FIG.1

# FIG.2

Se
SIL, Vo1, Vo2 → **STATE DETECTOR** (32) — SI → **PWM SIGNAL GENERATOR** (34) — SPWM → **OUTPUT-DESTINATION SELECTOR** (36) — S1 → **1ST DRIVE UNIT** (38) — S1 → M1
S2

SPT1
SSAW, SIL → **AFTER-SWITCHING ASSISTANT PERIOD DETERMINING UNIT** (46) — **SAWTOOTH WAVE RESET SIGNAL GENERATOR** (44) — Srs
SINV → **2ND DRIVE UNIT** (40) — S2 → M2

SINV → **INVERTER SIGNAL GENERATOR** (42)
SINV

30

20

EP 2 222 141 B1

# FIG.3

## FIG.4

FIG.5

## FIG.6

# FIG.7

FIG.8A

FIG.8B

# FIG.9

EP 2 222 141 B1

FIG.10

**FIG.11A**

IL, Vo2

Vo2=0

IL=0

Vo2

IL

TIME

**FIG.11B**

IL, Vo2

Vo2=0

IL=0

Vo2

IL

TIME

10μs

**FIG.11C**

IL, Vo2

100V

Vo2=0

IL=0

Vo2

IL

TIME

25μs

t1

FIG.12A

FIG.12B

FIG.12C

30

**EP 2 222 141 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI11329777 B
- JP 8222390 A
- JP 2009026560 A
- US 6437519 B1

**Non-patent literature cited in the description**

- **Doshi M et al.** Low frequency architecture for multi-lamp CCFL systems with Capacitive Ignition. *Applied Power Electronics Conference,* 2005, 1072-1078